(19) **Europäisches Patentamt / European Patent Office / Office européen des brevets**

(11) **EP 4 715 349 A1**

(12) **EUROPEAN PATENT APPLICATION**
published in accordance with Art. 153(4) EPC

(43) Date of publication:
**25.03.2026 Bulletin 2026/13**

(21) Application number: **24862382.9**

(22) Date of filing: **13.05.2024**

(51) International Patent Classification (IPC):
**G01J 3/36** (2006.01)

(52) Cooperative Patent Classification (CPC):
**G01J 3/36**

(86) International application number:
**PCT/JP2024/017679**

(87) International publication number:
**WO 2025/052725 (13.03.2025 Gazette 2025/11)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **05.09.2023 JP 2023143462**

(71) Applicant: **Hamamatsu Photonics K.K.**
**Hamamatsu-shi, Shizuoka 435-8558 (JP)**

(72) Inventors:
• **TSUCHIYA, Kunihiko**
  **Hamamatsu-shi, Shizuoka 435-8558 (JP)**
• **IWASE, Fumio**
  **Hamamatsu-shi, Shizuoka 435-8558 (JP)**
• **NAKAMURA, Tomonori**
  **Hamamatsu-shi, Shizuoka 435-8558 (JP)**
• **OHTSUKA, Kenichi**
  **Hamamatsu-shi, Shizuoka 435-8558 (JP)**

(74) Representative: **Hoffmann Eitle**
**Patent- und Rechtsanwälte PartmbB**
**Arabellastraße 30**
**81925 München (DE)**

(54) **SPECTROSCOPIC MEASUREMENT DEVICE AND SPECTROSCOPIC MEASUREMENT METHOD**

(57) A spectroscopic measurement device 1 includes a light source 4 that outputs light L with which an object S is irradiated, a spectroscopic unit 5 that spectrally separates the light L such that light of a plurality of different wavelengths is distributed in a plane including a moving direction of the object S, an imaging unit 6 that includes a plurality of pixels that are arrayed two-dimensionally, and sequentially images, at different timings, images of the object S that moves in an irradiation area R of the light L that is spectrally separated by the spectroscopic unit 5, and a generation unit 23 that generates spectral data D of the object S based on the images imaged by the imaging unit 6.

**Fig.1**

EP 4 715 349 A1

## Description

### Technical Field

The present disclosure relates to a spectroscopic measurement device and a spectroscopic measurement method.

### Background Art

As a conventional spectroscopic measurement device, for example, there is a spectroscopic measurement device described in Patent Literature 1. This conventional spectroscopic measurement device includes a conveyance unit that conveys a measurement object, a line-scan hyperspectral camera that acquires a hyperspectral image of the measurement object on the conveyance unit for each area of a field of view extending in a direction perpendicular to a direction of conveyance by the conveyance unit, an adjustment unit that adjusts a width of the field of view of the hyperspectral camera, and a control unit that controls at least one of a conveyance speed of the measurement object, a frame rate of the hyperspectral camera, and the width of the field of view of the hyperspectral camera such that a resolution in a direction of the width of the field of view in the hyperspectral image acquired by the hyperspectral camera, and a resolution in the direction of conveyance coincide with each other.

### Citation List

### Patent Literature

Patent Literature 1: Japanese Unexamined Patent Publication No. 2016-156777

### Summary of Invention

### Technical Problem

In the spectroscopic measurement device as described in Patent Literature 1, what is called a post-spectroscopic system is adopted in which diffusely reflected light from the object is spectrally separated by a spectroscope disposed immediately in front of a light receiving unit. However, with such a spectroscopic system, it is conceivable that the configuration tends to be relatively complicated, and the manufacturing cost of the device may also be increased.
The present disclosure has been made to solve the above problems, and an object of the present disclosure is to provide a spectroscopic measurement device and a spectroscopic measurement method that are capable of carrying out spectroscopic measurement at low cost with a simple configuration.

### Solution to Problem

The gist of the present disclosure is as follows.

[1] A spectroscopic measurement device including a light source that outputs light with which an object is irradiated, a spectroscopic unit that spectrally separates the light such that light of a plurality of different wavelengths is distributed in a plane including a moving direction of the object, an imaging unit that includes a plurality of pixels that are arrayed two-dimensionally, and sequentially images, at different timings, images of the object that moves in an irradiation area of the light that is spectrally separated by the spectroscopic unit, and a generation unit that generates spectral data of the object based on the images imaged by the imaging unit.

In this spectroscopic measurement device, the light output from the light source is spectrally separated in the plane including the moving direction of the object, the object that moves in the irradiation area is sequentially imaged with the plurality of pixels that are arrayed two-dimensionally, and the spectral data of the object is generated. In this spectroscopic measurement device, what is called a pre-spectroscopic system is adopted in which the object is irradiated with the light spectrally separated in advance into a plurality of different wavelengths. In what is called a post-spectroscopic system in which light from an object is spectrally separated and imaging is performed, it is necessary to incorporate a configuration for spectroscopy on an imaging side, and a problem of cost increase due to the complication of the configuration may arise. In contrast, in the pre-spectroscopic system, since the configuration for spectroscopy can be separated from the imaging side, it is possible to carry out spectroscopic measurement at low cost with a simple configuration.

[2] The spectroscopic measurement device according to [1], in which the generation unit generates, based on the images imaged by the imaging unit, three-dimensional spectral data in which two-dimensional luminance information of the object is accumulated in a time axis direction. This makes it possible to optimally carry out measurement of a parameter including a thickness of the object based on the spectral data.

[3] The spectroscopic measurement device according to [1] or [2], in which the imaging unit is configured with a monochrome camera. In this case, the spectral data of the object is composed only of the luminance information at each position of the object. The use of the monochrome camera without a color film makes it possible to accomplish further cost reduction as compared with a case of using a color camera.

[4] The spectroscopic measurement device according to any one of [1] to [3], in which the imaging unit reads only one or some of pixel columns arrayed in a direction orthogonal to the moving direction among the plurality of pixels that are arrayed two-dimensionally. In this case, since an amount of data required to create the spectral data can be reduced, an increase in speed of measurement is achieved.

[5] The spectroscopic measurement device according to any one of [1] to [4], in which an imaging axis of the imaging unit is coaxial with an optical axis of the light from the spectroscopic unit toward the object. When the imaging axis is inclined with respect to the optical axis of the spectrally separated light, it is conceivable that a wavelength deviation occurs depending on the thickness of the object. In contrast, by making the optical axis of the spectrally separated light and the imaging axis coaxial, the wavelength deviation dependent on the thickness of the object can be avoided, which achieves improvement in measurement accuracy with the spectral data.

[6] The spectroscopic measurement device according to [5], further including an optical element that collimates the light from the spectroscopic unit toward the object. In this case, it is possible to more reliably avoid the wavelength deviation dependent on the thickness of the object. Thus, further improvement in the measurement accuracy with the spectral data is achieved.

[7] The spectroscopic measurement device according to any one of [1] to [6], further including a correction unit that corrects a wavelength deviation of the light from the spectroscopic unit toward the object. In this case, it is possible to ensure the measurement accuracy with the spectral data by correcting the wavelength deviation.

[8] The spectroscopic measurement device according to any one of [1] to [7], further including a conveyance unit that moves the object in a predetermined direction at a constant speed. In this case, the moving speed of the object is made constant, whereby it is possible to uniquely determine an imaging condition of the object, and the spectral data can be optimally generated.

[9] A spectroscopic measurement method including an output step of outputting light with which an object is irradiated, a spectral separation step of spectrally separating the light such that light of a plurality of different wavelengths is distributed in a plane including a moving direction of the object, an imaging step of sequentially imaging, at different timings, images of the object that moves in an irradiation area of the light that is spectrally separated in the spectral separation step, using a plurality of pixels that are arrayed two-dimensionally, and a generation step of generating spectral data of the object based on the images imaged in the imaging step.

In this spectroscopic measurement method, the light output from the light source is spectrally separated in the plane including the moving direction of the object, the object that moves in the irradiation area is sequentially imaged with the plurality of pixels that are arrayed two-dimensionally, and the spectral data of the object is generated. In this spectroscopic measurement method, what is called a pre-spectroscopic system is adopted in which the object is irradiated with the light spectrally separated in advance into a plurality of different wavelengths. In what is called the post-spectroscopic system in which light from an object is spectrally separated and imaging is performed, it is necessary to incorporate the configuration for spectroscopy on the imaging side, and the problem of cost increase due to the complication of the configuration may arise. In contrast, in the pre-spectroscopic system, since the configuration for spectroscopy can be separated from the imaging side, it is possible to carry out spectroscopic measurement at low cost with a simple configuration.

[10] The spectroscopic measurement method according to [9], in which the generation step generates, based on the images imaged in the imaging step, three-dimensional spectral data in which two-dimensional luminance information of the object is accumulated in a time axis direction. This makes it possible to optimally carry out measurement of a parameter including a thickness of the object based on the spectral data.

[11] The spectroscopic measurement method according to [9] or [10], in which a monochrome camera is used in the imaging step. In this case, the spectral data of the object is composed only of the luminance information at each position of the object. The use of the monochrome camera without a color film makes it possible to accomplish further cost reduction as compared with a case of using a color camera.

[12] The spectroscopic measurement method according to any one of [9] to [11], in which, in the imaging step, only one or some of pixel columns arrayed in a direction orthogonal to the moving direction among the plurality of pixels that are arrayed two-dimensionally, are read. In this case, since an amount of data required to create the spectral data can be reduced, an increase in speed of measurement is achieved.

[13] The spectroscopic measurement method according to any one of [9] to [12], in which an imaging axis in the imaging step is coaxial with an optical axis of the light toward the object in the spectral separation step. When the imaging axis is inclined with respect to the optical axis of the spectrally separated light, it is conceivable that a wavelength deviation occurs depending on the thickness of the object. In contrast, the optical axis of the spectrally separated light and the imaging axis is coaxial, whereby the wavelength deviation dependent on the thickness of the object can be avoided, which achieves improvement in measurement accuracy with the spectral data.

[14] The spectroscopic measurement method according to [13], in which the light toward the object is collimated in the spectral separation step. In this case, it is possible to more reliably avoid the wavelength deviation dependent on the thickness of the object. Thus, further improvement in the measurement accuracy with the spectral data is achieved.

[15] The spectroscopic measurement method according to any one of [9] to [14], further including a correction step of correcting a wavelength deviation of the light toward the object. In this case, it is possible to ensure the measurement accuracy with the spectral data by correcting the wavelength deviation.

[16] The spectroscopic measurement method according to any one of [9] to [15], further including a conveyance step of moving the object in a predetermined direction. In this case, the moving speed of the object is made constant, whereby it is possible to uniquely determine an imaging condition of the object, which can optimally generate the spectral data.

## Advantageous Effects of Invention

According to the present disclosure, the spectroscopic measurement can be carried out at low cost with a simple configuration.

## Brief Description of Drawings

FIG. 1 is a schematic diagram illustrating a configuration of a spectroscopic measurement device according to an embodiment of the present disclosure.

FIG. 2 is a schematic enlarged diagram of a main part, illustrating a state of spectral separation by a spectroscopic unit.

FIGS. 3(a) to 3(c) are schematic plan views illustrating an irradiation area and a state of an object passing in the irradiation area.

FIG. 4 is a view schematically illustrating an example of spectral data.

FIG. 5 is a view schematically illustrating film thickness calculation based on the spectral data.

FIG. 6 is a schematic diagram illustrating an example of a configuration of a correction unit.

FIG. 7 is a schematic view illustrating a state of correction by the correction unit.

FIG. 8 is a flowchart illustrating a spectroscopic measurement method according to an embodiment of the present disclosure.

FIG. 9 is a schematic plan view illustrating a modification of an imaging unit.

## Description of Embodiments

Hereinafter, preferred embodiments of a spectroscopic measurement device and a spectroscopic measurement method according to aspects of the present disclosure will be described in detail with reference to the drawings.

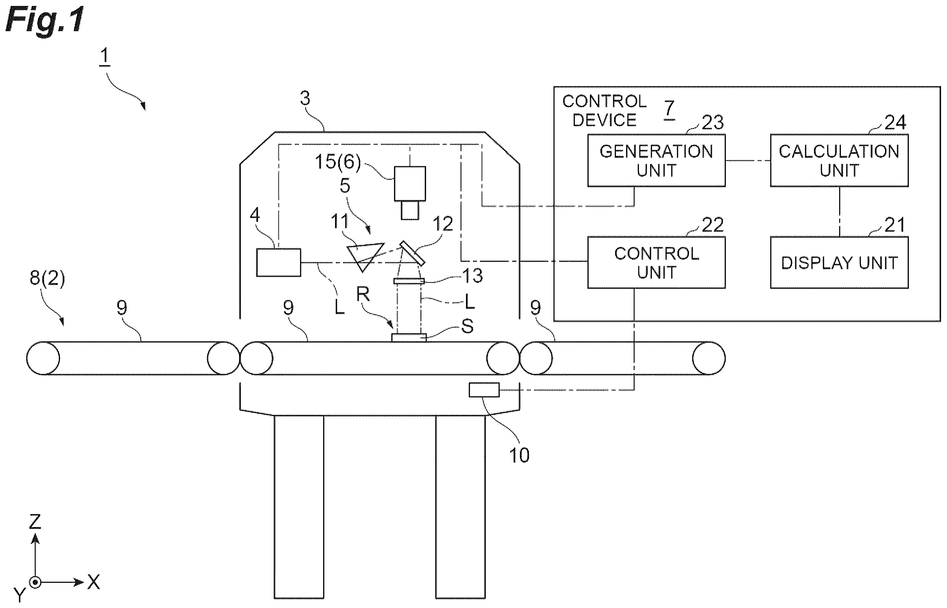

FIG. 1 is a schematic diagram illustrating a configuration of a spectroscopic measurement device according to an embodiment of the present disclosure. A spectroscopic measurement device 1 illustrated in FIG. 1 is configured as a device that irradiates an object S with light L and measures the shape and the like of the object S based on the light from the object S. Examples of applications of the spectroscopic measurement device 1 include film thickness inspection and defect inspection of a film, and foreign matter inspection of foods and processed products. In the present embodiment, the object S is a film, and the spectroscopic measurement device 1 is configured as a device that measures the film thickness of the film.

As illustrated in FIG. 1, the spectroscopic measurement device 1 includes a conveyance unit 2, a dark box 3, a light source 4, a spectroscopic unit 5, an imaging unit 6, and a control device 7. The conveyance unit 2 is a portion that moves the object S in a predetermined direction at a constant speed. In the present embodiment, the conveyance unit 2 is configured with, for example, a belt conveyor 8, and conveys the object S in a horizontal direction at a speed V. The belt conveyor 8 includes a belt unit 9 that moves the object S and an actuator 10 that actuates the belt unit 9. The operation of the actuator 10 is controlled by a control unit 22 to be described later.

In the following description, a moving direction of the object S in a horizontal plane is an X axis, a direction orthogonal to the moving direction in the horizontal plane is a Y axis, and a vertical direction orthogonal to the X axis and the Y axis is a Z axis.

The dark box 3 is a member that covers the light source 4 and the imaging unit 6. The dark box 3 is disposed so as to cover a part of the belt conveyor 8 (a portion including an irradiation area R of the light L from the light source 4). The dark box 3 restrains influence of light from the outside, that is, light other than the light L from the light source 4 toward the object S and the light L from the object S toward the imaging unit 6 from being exerted on the above components.

In the present embodiment, the light source 4 and the spectroscopic unit 5 configure reflected illumination for the object S. The light source 4 is a portion that outputs the light L with which the object S is irradiated. The light source 4 is, for example, a white light source that outputs white light. Examples of the white light source include a white LED, a halogen lamp light source, a super continuum light source, and a laser-driven light source. The type of the light source 4 is selected according to the type and the like of the object S. The light source 4 is not limited to the white light source as long as it outputs light having a certain wavelength band. The light source 4 may be a light source that outputs, for example, near-infrared light, infrared light, or ultraviolet light.

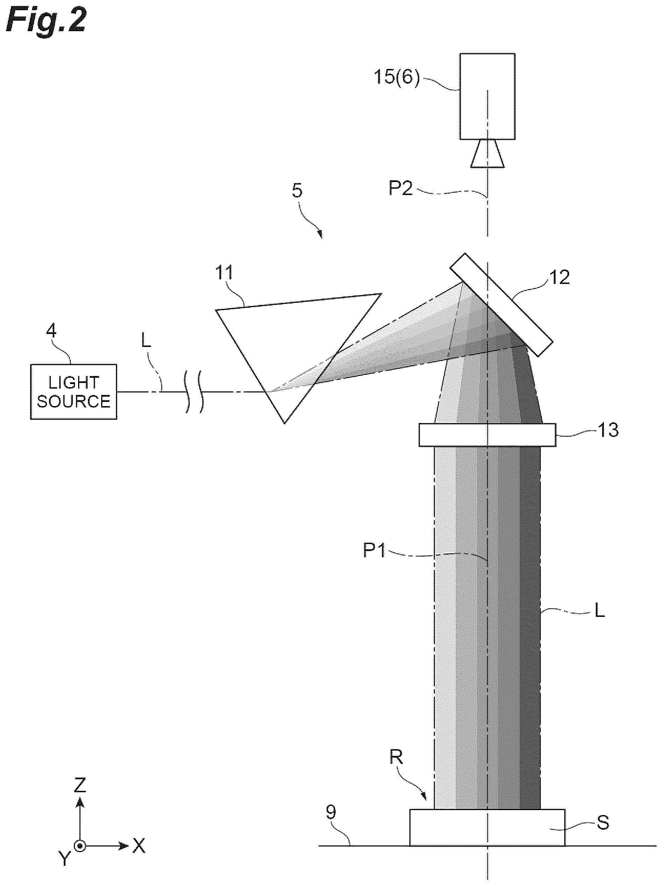

The spectroscopic unit 5 is a portion that spectrally separates the light L from the light source 4. The spectroscopic unit 5 spectrally separates the light L such that light of a plurality of different wavelengths is distributed in a plane including the moving direction of the object S. In the present embodiment, as illustrated in FIG. 2, the spectroscopic unit 5 is configured with an irradiation area 11, a beam splitter 12, and a field lens 13.

The irradiation area 11 is an optical element that spectrally separates the light L from the light source 4. The irradiation area 11 spectrally separates the light L, which is the white light, for each of the wavelengths (into rainbow colors) to generate a plurality of planar light fluxes having wavelengths different from each other in a direction intersecting an optical axis. The beam splitter 12 is an optical element that reflects part of incident light and transmits part thereof. The beam splitter 12 reflects part of the light L that is spectrally separated by the irradiation area 11 in the Z-axis direction. The beam splitter 12 may be configured with, for example, a half mirror.

The light L that has passed through the beam splitter 12 becomes planar light spreading in the X-axis direction and the Y-axis direction, is collimated by the field lens 13, and then forms the irradiation area R in two dimensions on the belt unit 9. The field lens 13 is a lens that is disposed in the vicinity of an image and adjusts a traveling direction of the light L near the image. The field lens 13 makes the image clear not only around the center of the collimated light L but also around a peripheral portion.

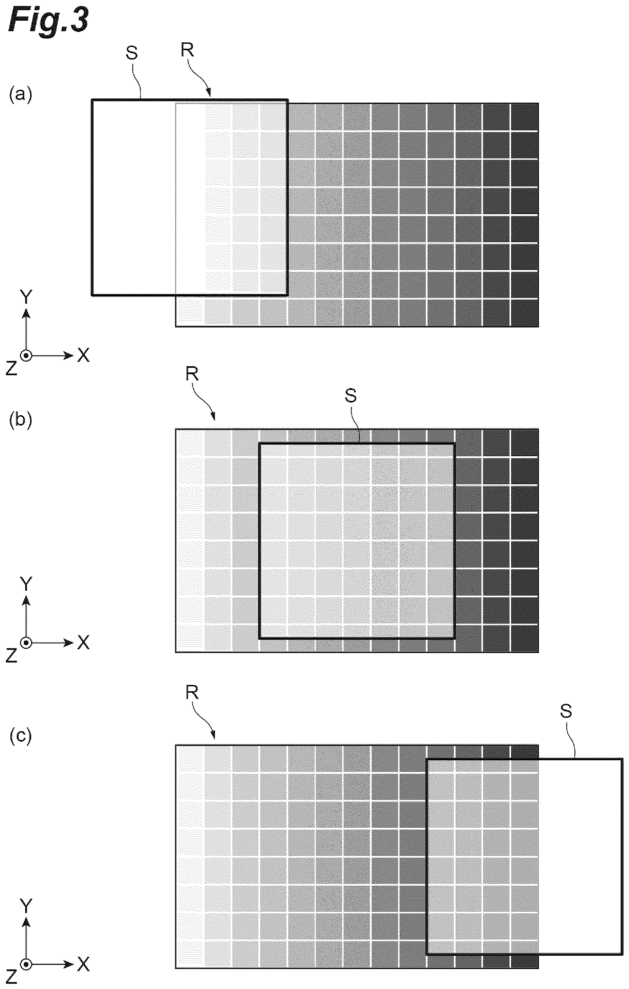

In the irradiation area R, as illustrated in FIGS. 3(a) to 3(c), the X-axis direction is a wavelength change direction of the light L that is spectrally separated by the spectroscopic unit 5. Here, for example, the light of the different wavelengths is arranged in the order of red, orange, yellow, green, blue, indigo, and purple from a back side to a front side in the conveyance direction. Light of the same wavelength extends in the Y-axis direction. The object S moves in the X-axis direction at a constant speed V with the belt unit 9, and sequentially passes through the irradiation area R from red to purple in order.

The imaging unit 6 is a portion that sequentially images, at different timings, images of the object S moving in the irradiation area R of the light L that is spectrally separated by the spectroscopic unit 5. The imaging unit 6 includes a plurality of pixels that are arrayed two-dimensionally. The imaging unit 6 is configured with, for example, a CMOS camera or a CCD camera. Here, reflected light obtained by reflecting the light L spectrally separated by the spectroscopic unit 5 off the object S is incident on the imaging unit 6. The light incident on the imaging unit 6 is not limited to the reflected light, and may be light scattered on the object S, fluorescence generated on the object S by irradiation with the light L, or the like. When the light L is near-infrared light to infrared light, the imaging unit 6 may be configured with an InGaAs camera, an InSb camera, a HgCdTe (MCT) camera, or the like. The imaging unit 6 outputs the images of the object S acquired by the imaging to the control device 7.

In the present embodiment, the imaging unit 6 is configured with a monochrome camera 15. The monochrome camera 15 is a camera without a color film, and only luminance information at each position of the object S is output from each pixel. In the present embodiment, as illustrated in FIG. 2, an imaging axis P2 of the imaging unit 6 is coaxial with an optical axis P1 of the light L from the spectroscopic unit 5 toward the object S. In the example of FIG. 2, both the optical axis P1 of the light L from the spectroscopic unit 5 toward the object S and the imaging axis P2 of the imaging unit 6 are along the Z-axis direction.

A relation between a frame rate $F_r$ of the imaging unit 6 and the moving speed V of the object S is expressed by Formula (1) below. In Formula (1), $F_v$ is a field of view of the imaging unit 6 in the Y-axis direction, and $P_{ny}$ is the number of pixels in the Y-axis direction in the imaging unit 6.

[Formula 1]

$$V = 60 \times \left( (F_v \times F_r)/P_{ny} \right) \cdots (1)$$

The imaging unit 6 carries out one imaging every time the object S moves by one pixel in the X-axis direction. The number of times of the imaging with the imaging unit 6 is larger than that in a case of using a line scan camera. When the number of pixel columns of the irradiation area R in the X-axis direction is n, (n-1) times of the imaging are carried out from when the object S reaches a position corresponding to a pixel column of the first column of the irradiation area R in the X-axis direction to when the object S reaches a position corresponding to a pixel of the (n-1)-th column in the X-axis direction. Thereafter, similarly to the case of using the line scan camera, the imaging is carried out the number of times corresponding to a length of the object S in the X-axis direction until the object S shifts out of the irradiation area R.

The control device 7 is physically configured with a computer system including a memory, such as a RAM and a ROM, a processor (arithmetic circuit), such as a CPU, a communication interface, a storage unit, such as an SSD and a hard disk, and a display unit 21, such as a display (see FIG. 1). The control device 7 functions by the CPU of the computer system executing a program stored in the memory. The control device 7 may be configured with a microcomputer, a PLC (programmable logic controller), an FPGA (field-programmable gate array), or the like.

As illustrated in FIG. 1, the control device 7 functionally includes the control unit 22, a generation unit 23, and a calculation unit 24. The control unit 22 is a portion that controls the operation of the spectroscopic measurement device 1. The control unit 22 controls, for example, each of on-off of the light source 4, the frame rate in the imaging by the imaging unit 6, the moving speed of the object S by the belt conveyor 8, and the like.

The generation unit 23 is a portion that generates spectral data D of the object S based on the images imaged by the imaging unit 6. The generation unit 23 receives the images output from the imaging unit 6, and generates three-dimensional spectral data in which two-dimensional luminance information of the object S is accumulated in a time axis direction. The generation unit 23 outputs the generated spectral data D to the calculation unit 24.

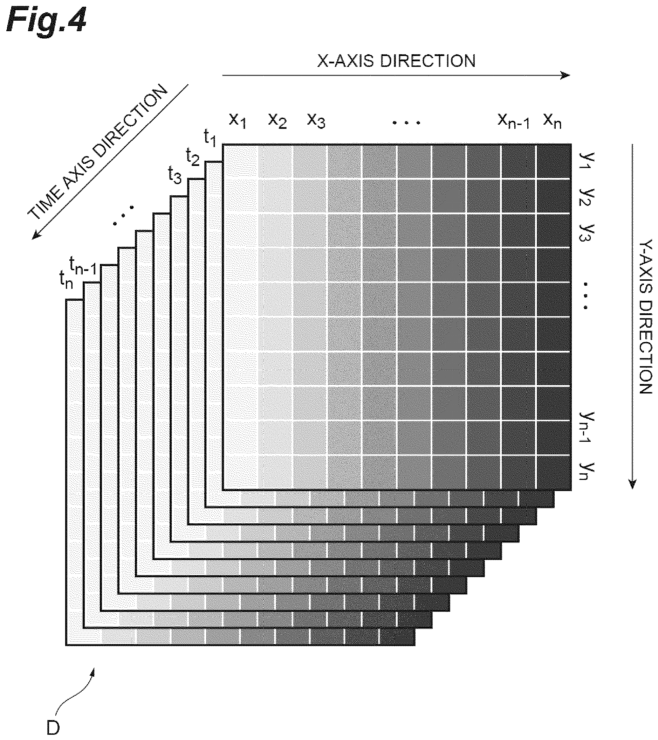

FIG. 4 is a view schematically illustrating an example of the spectral data. As mentioned above, in the spectroscopic measurement device 1, one imaging is carried out every time the object S moves by one pixel in the X-axis direction. Thus, when the number of pixels in the X-axis direction in the imaging unit 6 is $P_{nx}$ and the number of the pixels in the Y-axis direction is $P_{ny}$, as illustrated in FIG. 4, the spectral data D is three-dimensional spectral data in which two-dimensional luminance information of $P_{nx} \times P_{ny}$ is accumulated from $t_i$ to $t_n$ in the time axis direction.

Spectra S of the luminance information obtained from the spectral data D are expressed by Formula (2) below. Further, line optical spectra $S_L$ of the luminance information obtained from the spectral data D are expressed by Formula (3) below.

[Formula 2]

$$ S = (x_1, t_1)(x_2, t_2)(x_3, t_3)(x_4, t_4) \cdots (x_{n-1}, t_{n-1})(x_n, t_n) \cdots (2) $$

[Formula 3]

$$ S_L = \begin{bmatrix} (x_1,t_1,y_1)(x_2,t_2,y_1)(x_3,t_3,y_1)(x_4,t_4,y_1) \cdots (x_{n-1},t_{n-1},y_1)(x_n,t_n,y_1) \\ (x_1,t_1,y_2)(x_2,t_2,y_2)(x_3,t_3,y_2)(x_4,t_4,y_2) \cdots (x_{n-1},t_{n-1},y_2)(x_n,t_n,y_2) \\ (x_1,t_1,y_3)(x_2,t_2,y_3)(x_3,t_3,y_3)(x_4,t_4,y_3) \cdots (x_{n-1},t_{n-1},y_3)(x_n,t_n,y_3) \\ \vdots \\ (x_1,t_1,y_n)(x_2,t_2,y_n)(x_3,t_3,y_n)(x_4,t_4,y_n) \cdots (x_{n-1},t_{n-1},y_n)(x_n,t_n,y_n) \end{bmatrix} \cdots (3) $$

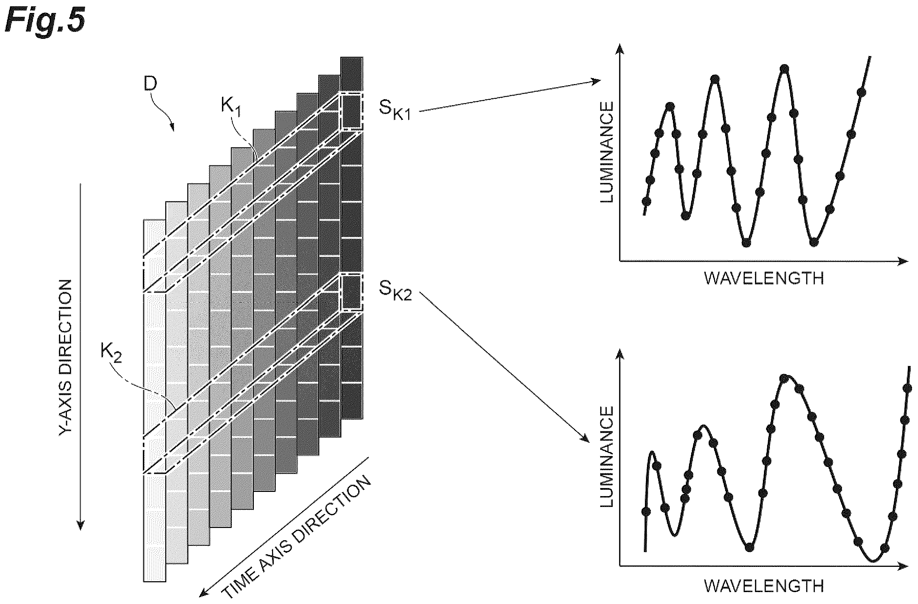

The calculation unit 24 is a portion that calculates a predetermined parameter of the object S based on the spectral data D. Here, the calculation unit 24 calculates the film thickness of the film that is the object S based on the spectral data D output from the generation unit 23. FIG. 5 is a view schematically illustrating film thickness calculation based on the spectral data. As illustrated in FIG. 5, the calculation unit 24 individually plots luminance with respect to wavelengths at freely selected positions k1 and k2 based on spectra $S_{k1}$ and $S_{k2}$ of luminance information at the positions k1 and k2 of the object S, for example. The calculation unit 24 calculates film thicknesses of the object S at the respective positions k1 and k2 based on interference fringe spacing obtained by the plotting of the luminance with respect to the wavelengths, and displays a calculation result on the display unit 21.

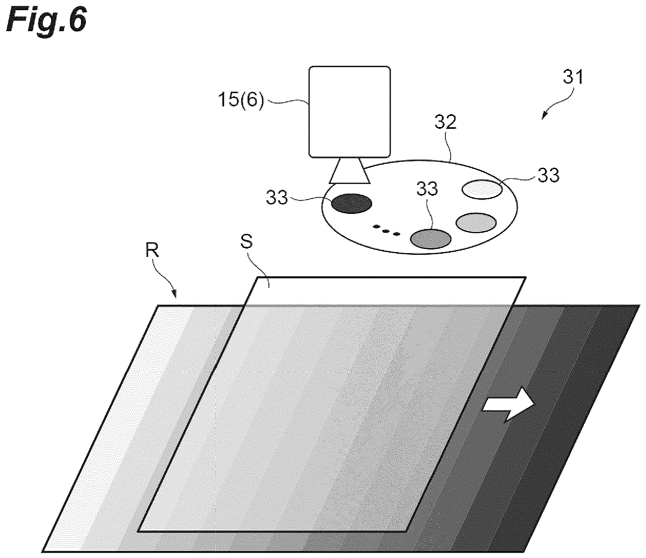

In the present embodiment, the spectroscopic measurement device 1 includes a correction unit 31 that corrects a wavelength deviation of the light L from the spectroscopic unit 5 toward the object S. For the wavelength deviation here, a case is assumed where the wavelength change direction of the light L that is spectrally separated by the spectroscopic unit 5 does not coincide with the X-axis direction. For example, as illustrated in FIG. 6, the correction unit 31 is configured with a plurality of band pass filters 33 that are annularly arranged on a plate-shaped member 32. The plurality of band pass filters 33 are set according to the wavelengths of the light L spectrally separated by the spectroscopic unit 5. Here, in the plate-shaped member 32 having a disk shape, for example, seven band pass filters 33 of center wavelengths $\lambda_1$, $\lambda_2$, ..., and $\lambda_7$ corresponding to the seven colors of red, orange, yellow, green, blue, indigo, and purple are arranged in a ring shape.

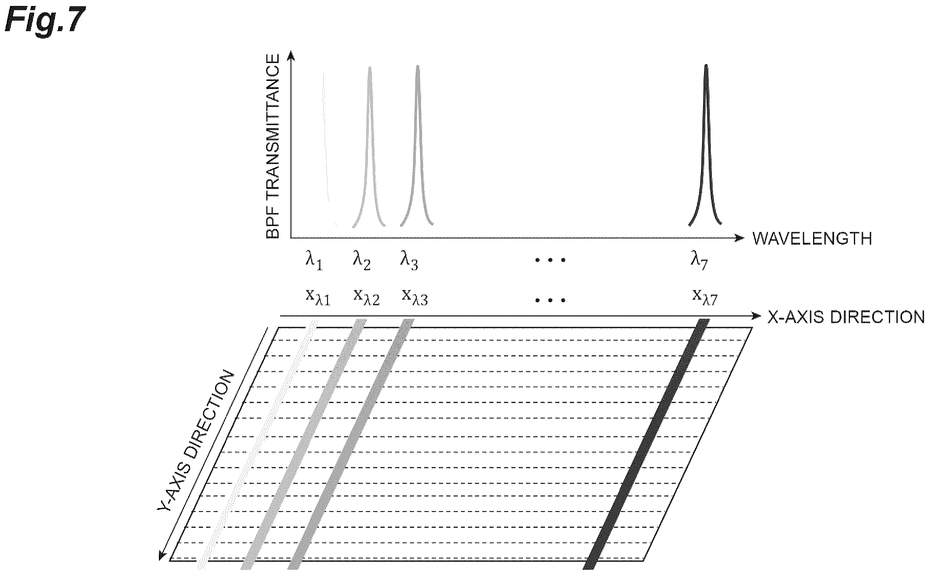

When the wavelength deviation of the light L is corrected by the correction unit 31, the irradiation area R is imaged via each of the band pass filters 33. In the imaging the irradiation area R, the imaging may be performed via the object S, or the imaging may be performed not via the object S. Next, as illustrated in FIG. 7, relations between coordinates X in the X-axis direction and the wavelengths are corrected by polynomial approximation with respect to respective coordinates in the Y-axis direction, using the center wavelengths $\lambda_1$, $\lambda_2$, ..., and $\lambda_7$ of the respective band pass filters 33 and coordinates $X_{\lambda_1}$, $X_{\lambda_2}$, ..., and $X_{\lambda_7}$ in the X-axis direction corresponding to the above respective center wavelengths. The polynomial at each coordinate Yn in the Y-axis direction is represented in a form, for example, $\lambda(X, Yn) = a + bx + cx^2$ ... (a to c are constants). Such correction operation may be carried out using an FPGA (field-programmable gate array) mounted on the imaging unit 6 or a correction file in software.

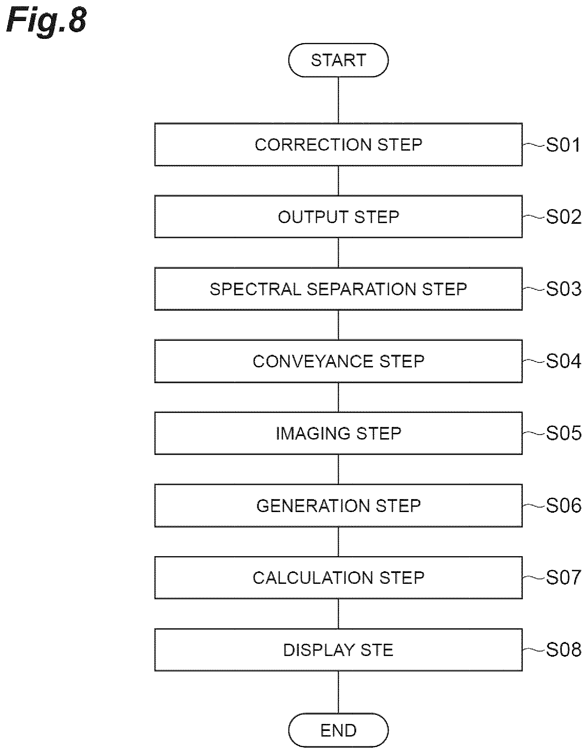

FIG. 8 is a flowchart illustrating a spectroscopic measurement method according to an embodiment of the present disclosure. As illustrated in FIG. 8, the spectroscopic measurement method of the present embodiment includes correction step S01, output step S02, spectral separation step S03, conveyance step S04, imaging step S05, generation step S06, calculation step S07, and display step S08. The spectroscopic measurement method of the present embodiment is carried out using, for example, the aforementioned spectroscopic measurement device 1.

The correction step S01 is a step of correcting the wavelength deviation of the light L toward the object S. Here, the irradiation area R is imaged via each of the band pass filters 33 using the aforementioned correction unit 31. Next, the relations between the coordinates X in the X-axis direction and the wavelengths are corrected by polynomial approximation with respect to the respective coordinates in the Y-axis direction, using the center wavelengths $\lambda_1$, $\lambda_2$, ..., and $\lambda_7$ of the respective band pass filters 33 and the coordinates $X\lambda_1$, $X\lambda_2$, ..., and $X\lambda_7$ in the X-axis direction corresponding to the above respective center wavelengths. Note that the correction step S01 does not need to be carried out every time the measurement of the object S is started, and the processing may be omitted and proceed to the output step S02.

The output step S02 is a step of outputting the light L with which the object S is irradiated. In the output step S02, the light source 4 is turned on, and the light L from the light source 4 is input to the spectroscopic unit 5. The spectral separation step S03 is a step of spectrally separating the light L. In the spectral separation step S03, the light L from the light source 4 is spectrally separated by the irradiation area 11, and the spectrally separated light L is reflected by the beam splitter 12 in the Z-axis direction. Then, the light L is collimated by the field lens 13 to form the irradiation area R on the conveyance unit 2 (belt unit 9).

The conveyance step S04 is a step of moving the object S in a predetermined direction. In the conveyance step S04, the belt conveyor 8 that is the conveyance unit 2 is driven to move the object S placed on the belt unit 9 toward the irradiation area R in the horizontal direction at a constant speed. The imaging step S05 is a step of imaging images of the object S using the plurality of pixels that are arrayed two-dimensionally. Here, the imaging axis P2 is coaxial with the optical axis of the light L toward the object S, and the object S moving in the irradiation area R is sequentially imaged by the monochrome camera 15 at different timings.

The generation step S06 is a step of generating the spectral data D of the object S. In the generation step S06, three-dimensional spectral data in which two-dimensional luminance information of the object S is accumulated in the time axis direction is generated based on the images imaged in the imaging step S05.

The calculation step S07 is a step of calculating a predetermined parameter of the object S based on the spectral data D. Here, the film thickness of the film that is the object S is calculated based on the spectral data D generated in the generation step S06. The display step S08 is a step of displaying a calculation result. In the display step S08, the calculation result in the calculation step S07 is displayed on the display unit 21.

As described above, in the present embodiment, the light L output from the light source 4 is spectrally separated in the plane including the moving direction of the object S, the object S that moves in the irradiation area R is sequentially imaged with the plurality of pixels that are arrayed two-dimensionally, and the spectral data D of the object S is generated. In the present embodiment, what is called a pre-spectroscopic system is adopted in which the object S is irradiated with the light L spectrally separated in advance into the plurality of different wavelengths. In what is called a post-spectroscopic system in which light from an object is spectrally separated and imaging is performed, it is necessary to incorporate a configuration for spectroscopy on an imaging side, and a problem of cost increase due to the complication of the configuration may arise. In contrast, in the pre-spectroscopic system, since the configuration for spectroscopy can be separated from the imaging side, it is possible to carry out spectroscopic measurement at low cost with a simple configuration.

In the present embodiment, the generation unit 23 generates, based on the images imaged by the imaging unit 6, the three-dimensional spectral data in which the two-dimensional luminance information of the object S is accumulated in the time axis direction. This makes it possible to optimally carry out measurement of the parameter including the thickness of the object S based on the spectral data D.

In the present embodiment, the imaging unit 6 is configured with the monochrome camera 15. In this case, the spectral data D of the object S is composed only of the luminance information at each position of the object S. The use of the monochrome camera 15 without a color film makes it possible to accomplish further cost reduction as compared with the case of using a color camera.

In the present embodiment, the imaging axis P2 of the imaging unit 6 is coaxial with the optical axis P1 of the light L from the spectroscopic unit 5 toward the object S. When an imaging axis is inclined with respect to an optical axis of spectrally separated light, it is conceivable that a wavelength deviation occurs depending on the thickness of an object. In contrast, the optical axis P1 of the spectrally separated light L and the imaging axis P2 are coaxial, whereby the wavelength deviation dependent on the thickness of the object S can be avoided, which achieves improvement in measurement accuracy with the spectral data D.

In the present embodiment, an optical element (field lens 13) that collimates the light L from the spectroscopic unit 5 toward the object S is provided. In this case, it is possible to more reliably avoid the wavelength deviation dependent on the thickness of the object S. Thus, further improvement in the measurement accuracy with the spectral data D is achieved.

In the present embodiment, the correction unit 31 that corrects the wavelength deviation of the light L from the spectroscopic unit 5 toward the object S is provided. In this case, it is possible to ensure the measurement accuracy with the spectral data D by correcting the wavelength deviation.

In the present embodiment, the conveyance unit 2 that moves the object S in a predetermined direction at a constant speed is provided. In this case, the moving speed of the object S is made constant, whereby it is possible to uniquely determine an imaging condition of the object S, which can optimally generate the spectral data D.

The present disclosure is not limited to the above embodiments. For example, in the above embodiments, both the optical axis P1 of the light L from the spectroscopic unit 5 toward the object S and the imaging axis P2 of the imaging unit 6 are along the vertical direction, and the optical axis P1 and the imaging axis P2 are coaxial; however, the optical axis P1 and the imaging axis P2 may be non-coaxial. In this case, for example, a configuration in which the imaging axis P2 may be in a state along the vertical direction, and the optical axis P1 of the light L that is spectrally separated by the spectroscopic unit 5 may be inclined at a predetermined angle from the vertical direction may be employed. In this case, the disposition of the field lens 13 may be omitted, and the irradiation area R may be directly formed by the light L spectrally separated by the spectroscopic unit 5.

In the above embodiments, the light from the light source 4 is spectrally separated by the irradiation area 11; however, the optical element used for the spectral separation is not limited to the irradiation area 11, and a reflective or transmissive grating may be used. In the above embodiments, the reflected light obtained by reflecting the light L spectrally separated by the spectroscopic unit 5 off the object S is imaged by the imaging unit 6; however, for example, the imaging unit 6 may be disposed on the belt conveyor 8 side, and transmitted light obtained by transmitting the light L spectrally separated by the spectroscopic unit 5 through the object S may be imaged by the imaging unit 6.

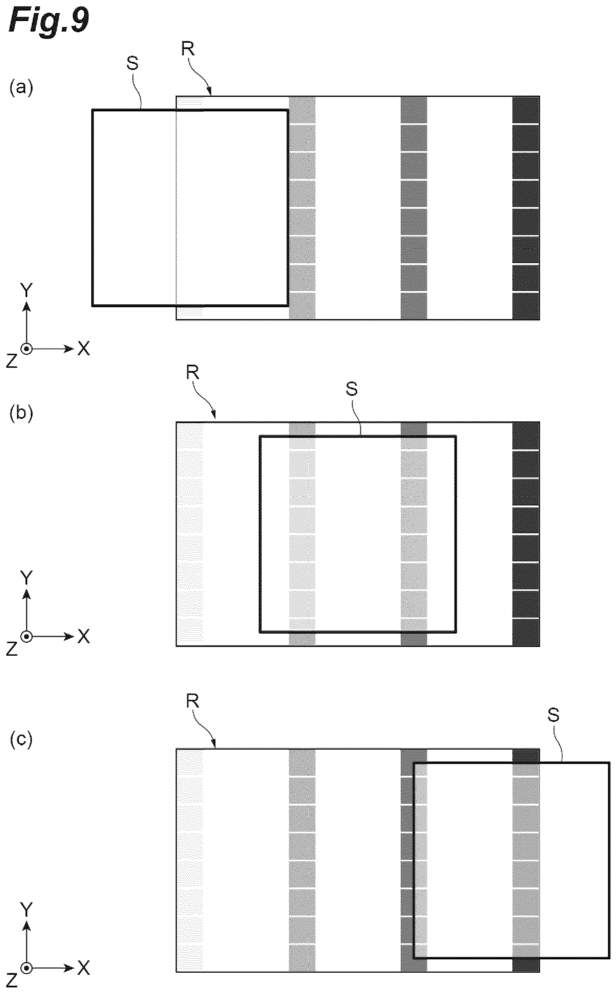

In the above embodiments, reading from all the two-dimensionally arrayed pixels is performed in the imaging unit 6; however, as illustrated in FIG. 9, a mode in which only one or some of the pixel columns arrayed in the Y-axis direction among the plurality of pixels that are arrayed two-dimensionally are read, may be employed. In this case, since an amount of data required to create the spectral data D can be reduced, an increase in speed of measurement is achieved. In the example of FIG. 9, reading is intermittently performed every four-pixel columns. In this case, while the types of the wavelengths used for the measurement of the object S are reduced to 1/4, an increase in the measurement speed to four times is made possible.

In the above embodiments, the plate-shaped member 32 including the plurality of band pass filters 33 is used as the correction unit 31; however, the configuration of the correction unit 31 is not limited thereto. For example, the correction unit 31 can be configured with a mercury lamp. In this case, for example, a mercury lamp is disposed at the position of the light source 4 instead of the light source 4. Light from the mercury lamp is spectrally separated into a plurality of emission lines by the spectroscopic unit 5, and the irradiation area R is irradiated with the light, and imaging is performed by the imaging unit 6. Using emission line spectra $\lambda_{Hg1}$, $\lambda_{Hg2}$, ..., and $\lambda_{Hgn}$ of the mercury lamp and coordinates $X_{\lambda1}$, $X_{\lambda2}$, ..., and $X_{\lambda n}$ in the X-axis direction corresponding to the respective emission line spectra, relations between the coordinates in the X-axis direction and the wavelengths are corrected by polynomial approximation with respect to respective coordinates in the Y-axis direction. With the correction unit 31 using the mercury lamp, it is not necessary to switch band pass filters or the like, and it is possible to carry out the correction of the wavelength deviation in a shorter time. In addition, since atomic rays are targeted, accuracy of the correction can be enhanced.

**Reference Signs List**

1    spectroscopic measurement device
2    conveyance unit
4    light source
5    spectroscopic unit
6    imaging unit
13   field lens (optical element)
15   monochrome camera (imaging unit)

23    generation unit
31    correction unit
S     object
L     light
R     irradiation area
D     spectral data
P1    optical axis
P2    imaging axis

**Claims**

1.  A spectroscopic measurement device comprising:

    a light source configured to output light with which an object is irradiated;
    a spectroscopic unit configured to spectrally separate the light such that light of a plurality of different wavelengths is distributed in a plane including a moving direction of the object;
    an imaging unit configured to include a plurality of pixels that are arrayed two-dimensionally, and sequentially image, at different timings, images of the object that moves in an irradiation area of the light that is spectrally separated by the spectroscopic unit; and
    a generation unit configured to generate spectral data of the object based on the images imaged by the imaging unit.

2.  The spectroscopic measurement device according to claim 1, wherein the generation unit generates, based on the images imaged by the imaging unit, three-dimensional spectral data in which two-dimensional luminance information of the object is accumulated in a time axis direction.

3.  The spectroscopic measurement device according to claim 1 or 2, wherein the imaging unit is configured with a monochrome camera.

4.  The spectroscopic measurement device according to any one of claims 1 to 3, wherein the imaging unit reads only one or some of pixel columns arrayed in a direction orthogonal to the moving direction among the plurality of pixels that are arrayed two-dimensionally.

5.  The spectroscopic measurement device according to any one of claims 1 to 4, wherein an imaging axis of the imaging unit is coaxial with an optical axis of the light from the spectroscopic unit toward the object.

6.  The spectroscopic measurement device according to claim 5, further comprising an optical element configured to collimate the light from the spectroscopic unit toward the object.

7.  The spectroscopic measurement device according to any one of claims 1 to 6, further comprising a correction unit configured to correct a wavelength deviation of the light from the spectroscopic unit toward the object.

8.  The spectroscopic measurement device according to any one of claims 1 to 7, further comprising a conveyance unit configured to move the object in a predetermined direction at a constant speed.

9.  A spectroscopic measurement method comprising:

    an output step of outputting light with which an object is irradiated;
    a spectral separation step of spectrally separating the light such that light of a plurality of different wavelengths is distributed in a plane including a moving direction of the object;
    an imaging step of sequentially imaging, at different timings, images of the object that moves in an irradiation area of the light that is spectrally separated in the spectral separation step, using a plurality of pixels that are arrayed two-dimensionally; and
    a generation step of generating spectral data of the object based on the images imaged in the imaging step.

10. The spectroscopic measurement method according to claim 9, wherein the generation step generates, based on the images imaged in the imaging step, three-dimensional spectral data in which two-dimensional luminance information of the object is accumulated in a time axis direction.

11. The spectroscopic measurement method according to claim 9 or 10, wherein a monochrome camera is used in the imaging step.

12. The spectroscopic measurement method according to any one of claims 9 to 11, wherein, in the imaging step, only one or some of pixel columns arrayed in a direction orthogonal to the moving direction among the plurality of pixels that are arrayed two-dimensionally, are read.

13. The spectroscopic measurement method according to any one of claims 9 to 12, wherein an imaging axis in the imaging step is coaxial with an optical axis of the light toward the object in the spectral separation step.

14. The spectroscopic measurement method according to claim 13, wherein the light toward the object is collimated in the spectral separation step.

15. The spectroscopic measurement method according to any one of claims 9 to 14, further comprising a correction step of correcting a wavelength deviation of the light toward the object.

16. The spectroscopic measurement method according to any one of claims 9 to 15, further comprising a conveyance step of moving the object in a predetermined direction.

## Fig.1

*Fig.2*

# *Fig.3*

(a)

(b)

(c)

# Fig.4

*Fig.5*

# *Fig.6*

Fig.7

*Fig.8*

START

CORRECTION STEP — S01

OUTPUT STEP — S02

SPECTRAL SEPARATION STEP — S03

CONVEYANCE STEP — S04

IMAGING STEP — S05

GENERATION STEP — S06

CALCULATION STEP — S07

DISPLAY STE — S08

END

## Fig.9

(a)

(b)

(c)

## INTERNATIONAL SEARCH REPORT

| International application No. |
| :--- |
| **PCT/JP2024/017679** |

### A. CLASSIFICATION OF SUBJECT MATTER

*G01J 3/36*(2006.01)i
FI: G01J3/36

According to International Patent Classification (IPC) or to both national classification and IPC

### B. FIELDS SEARCHED

Minimum documentation searched (classification system followed by classification symbols)

G01J3/00-3/52: G01N21/00-21/958

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| :---: | :--- | :---: |
| X | US 2016/0033330 A1 (TECHNION RESEARCH & DEVELOPMENT FOUNDATION LIMITED) 04 February 2016 (2016-02-04)<br>paragraphs [0032]-[0038], fig. 4-6 | 1-16 |
| A | JP 2016-156777 A (SUMITOMO ELECTRIC INDUSTRIES, LTD.) 01 September 2016 (2016-09-01)<br>entire text, all drawings | 1-16 |
| A | US 2007/0146700 A1 (KOWARZ MAREK W) 28 June 2007 (2007-06-28)<br>entire text, all drawings | 1-16 |

☐ Further documents are listed in the continuation of Box C.  ☑ See patent family annex.

| | | |
| :--- | :--- | :--- |
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "D" | document cited by the applicant in the international application | "X" document of particular relevance; the claimed invention cannot be considered novel or cannot be considered to involve an inventive step when the document is taken alone |
| "E" | earlier application or patent but published on or after the international filing date | |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" document member of the same patent family |
| "P" | document published prior to the international filing date but later than the priority date claimed | |

| Date of the actual completion of the international search | Date of mailing of the international search report |
| :--- | :--- |
| **08 July 2024** | **23 July 2024** |

| Name and mailing address of the ISA/JP | Authorized officer |
| :--- | :--- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/017679**

| Patent document cited in search report | Publication date (day/month/year) | Patent family member(s) | Publication date (day/month/year) |
|---|---|---|---|
| US 2016/0033330 A1 | 04 February 2016 | EP 2980625 A1 | |
| JP 2016-156777 A | 01 September 2016 | (Family: none) | |
| US 2007/0146700 A1 | 28 June 2007 | (Family: none) | |

Form PCT/ISA/210 (patent family annex) (July 2022)

**REFERENCES CITED IN THE DESCRIPTION**

**Patent documents cited in the description**

• JP 2016156777 A